(19)

Europäisches
Patentamt
European
Patent Office
Office européen
des brevets

(11) **EP 4 120 421 A1**

(12) **EUROPEAN PATENT APPLICATION**
published in accordance with Art. 153(4) EPC

(43) Date of publication:
**18.01.2023  Bulletin 2023/03**

(21) Application number: **22755570.3**

(22) Date of filing: **17.02.2022**

(51) International Patent Classification (IPC):
***H01M 10/0567*** *(2010.01)*

(52) Cooperative Patent Classification (CPC):
**H01M 4/36; H01M 4/38; H01M 4/485; H01M 4/583;**
**H01M 4/60; H01M 10/0525; H01M 10/0567;**
Y02E 60/10

(86) International application number:
**PCT/CN2022/076680**

(87) International publication number:
**WO 2022/174797 (25.08.2022 Gazette 2022/34)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority:  **20.02.2021   CN 202110193700**

(71) Applicants:
• **BTR NEW MATERIAL GROUP CO., LTD.**
**Shenzhen, Guangdong 518106 (CN)**
• **Dingyuan New Energy Technology Co., Ltd.**
**Huizhou, Guangdong 516227 (CN)**

(72) Inventors:
• **XIE, Wei**
**Shenzhen, Guangdong 518106 (CN)**
• **PANG, Chunlei**
**Shenzhen, Guangdong 518106 (CN)**
• **DENG, Zhiqiang**
**Shenzhen, Guangdong 518106 (CN)**
• **REN, Jianguo**
**Shenzhen, Guangdong 518106 (CN)**
• **HE, Xueqin**
**Shenzhen, Guangdong 518106 (CN)**

(74) Representative: **advotec.**
**Patent- und Rechtsanwaltspartnerschaft**
**Tappe mbB**
**Widenmayerstraße 4**
**80538 München (DE)**

(54) **NEGATIVE ELECTRODE MATERIAL, AND PREPARATION METHOD THEREFOR AND USE THEREOF**

(57)     The present disclosure belongs to the technical field of lithium battery material, and relates to a negative electrode material, a method therefor and use thereof, the method comprises the following step: conducting a lithiation treatment on a negative electrode raw material in a lithiation solution; the lithiation solution comprises Li-aromatic composition; wherein the aromatic composition comprises unsubstituted aromatic compounds and substituted aromatic compounds; or the aromatic composition comprises at least two substituted aromatic compounds. The negative electrode material, method therefor and use thereof provided by the present disclosure can improve the depth and efficiency of lithium intercalation, reduce the loss of the irreversible capacity and improve the capacity of batteries.

mixing an organic solution of the aromatic composition and a lithium source to prepare a lithiation solution; wherein the aromatic composition comprises an unsubstituted aromatic compound and a substituted aromatic compound; or the aromatic composition comprises at least two substituted aromatic compounds;  — S10

conducting a lithiation treatment on a negative electrode raw material in a lithiation solution, and then drying to obtain a pre-lithiated negative electrode material  — S20

FIG. 1

## Description

## CROSS-REFERENCE TO RELATED APPLICATIONS

The present application claims the benefit of priority of Chinese patent application No. CN202110193700.7 filed with the China Patent Office on February 20, 2021, entitled "Negative Electrode Material for lithium-ion battery, method for pre-lithiation treatment, and Lithium-Ion Battery", the content of which is hereby incorporated by reference in its entirety.

## TECHNICAL FIELD

The present disclosure belongs to the technical field of battery material, and relates to a negative electrode material, a method therefor and use thereof.

## BACKGROUND

Lithium-ion batteries have been widely used in electric vehicles and consumer electronics products due to their advantages of high energy density and output power, long cycle service life and environmental friendliness. In order to improve the energy density of batteries, the research and development of graphite-based anode materials tend to be mature gradually. However, a larger volumetric expansion (>300%) may appear in the silicon-based negative electrode materials during the process of delithiation/lithiation, resulting in the silicon-based negative electrode materials pulverized and then dropped from the current collector during the charging and discharging process. In this regard, the electrical contact between the active material and the current collector is lost, and the large loss of the first irreversible capacity consumes a great quantity of lithium ions in the electrolyte and removed from the positive electrode material, and resulting in a lower charge-discharge efficiency, lower discharge specific capacity and poor stability, finally the energy density and cyclic life of the battery are reduced. Pre-lithiation technology provides an effective solution for solving the problem of irreversible capacity loss and improving coulombic efficiency.

Electrochemical pre-lithiation and direct contact short-circuit method are effective and simple methods, which can reduce the first irreversible loss of high-capacity carbon materials, alloyed anodes and conversion materials. This method has the advantages of precise control of the amount of the pre-lithiation and good stability, but its high requirements on the environment, such as oxygen-free, water-free, and dry environment, limit its large-scale application.

Positive and negative electrode pre-lithiation additives can also be used. However, the compatibility of these additives with electrode preparation process, electrolyte, binder and battery assembly process (self-stability, gas production, toxicity, etc.) during use still needs to be further improved.

On the other hand, chemical pre-lithiation technology has made important research progress in recent years. It is a simple and effective method to prepare pre-lithiated positive and negative materials by chemical pre-lithiation technology. However, due to their oxidation state or reduced state, the materials prepared by this technology are susceptible to air and humidity at room temperature, and have challenges to achieve large-scale applications.

Materials prepared by the above-described methods have limited depth of lithium intercalation and low initial coulombic efficiency, and cannot meet the demand.

## SUMMARY

The present disclosure provides a method for preparing a negative electrode material, comprising the following step:

conducting a lithiation treatment on a negative electrode raw material in a lithiation solution;
the lithiation solution comprises Li- aromatic composition;
wherein the aromatic composition comprises an unsubstituted aromatic compound and a substituted aromatic compound; or the aromatic composition comprises at least two substituted aromatic compounds.

In the above solution, through utilizing the synergistic effect between different combinations of the substituted aromatic compounds or the synergistic effect between substituted aromatic compounds and unsubstituted aromatic compounds, a gradient channel of potential difference for lithium intercalation is constructed by the combinations of aromatic compounds with different potentials, such that the chemical intercalation of lithium ion can be carried out spontaneously and rapidly between the lithium source and the negative electrode raw material in an organic solvent, thereby improving the depth and efficiency of lithium intercalation effectively, reducing the loss of the irreversible capacity and improving the capacity of batteries.

In some embodiments, the aromatic compound includes at least one of benzene, biphenyl, terphenyl, naphthalene, anthracene, phenanthrene, pyrene, tetracene, and pyridine.

In some embodiments, substituents of the substituted aromatic compound include at least one of alkyl, alkoxy, aryloxy, halogen, ester, amine, substituted-carbonyl and amide.

In some embodiments, the alkyl includes at least one of straight-chain or branched-chain alkyl having 1 to 6 carbon atoms. Optionally, the alkyl includes at least one of straight-chain or branched-chain alkyl having 1 to 3 carbon atoms, such as methyl ($-CH_3$), ethyl ($-CH_2CH_3$), n-propyl ($-CH_2CH_2CH_3$) and/or isopropyl ($-CH(CH_3)_2$).

In some embodiments, the alkoxy includes at least one of straight-chain or branched-chain alkoxy having 1 to 4 carbon atoms. Optionally, the alkoxy includes methoxy ($-OCH_3$) and/or ethoxy ($-OC_2H_5$).

In some embodiments, the aryloxy includes phenoxy.

In some embodiments, the halogen includes at least one of -F, -Cl, -Br and -I.

In some embodiments, the ester includes at least one of alkyl ester and aryl ester. Optionally, the ester is $-COOR_1$ or methyl formate group, wherein $R_1$ includes at least one of straight-chain or branched-chain alkyl, phenyl or benzyl having 1 to 3 carbon atoms.

In some embodiments, the amine group includes at least one of $-NH_2$, $-R_2NH_2$, $-NHR_3$ and $-NR_4R_5$, wherein $R_2$ is at least one of alkylidene or substituted alkylidene having 1 to 3 carbon atoms, for example, $R_2$ can be $-CH_2-$, $-CH_2CH_2-$, $-CH_2CH_2CH_2-$, $-CH(CH_3)-$, $-C(CH_3)_2-$, $-CH(CH_3)CH_2-$, $-CH_2CH(CH_3)-$, etc., and $R_3$, $R_4$ and $R_5$ are at least one independently selected from the group consisting of straight-chain or branched-chain alkyl having 1 to 3 carbon atoms.

In some embodiments, the substituted carbonyl includes $-COR_6$, wherein $R_6$ includes at least one of straight-chain or branched-chain alkyl, phenyl or substituted phenyl having 1 to 6 carbon atoms. Optionally, for the type of the substituent of the substituted phenyl, refer to the type of the substituent of the substituted aromatic compound listed above, for example, the substituent of the substituted phenyl can be at least one of alkyl, alkoxy, aryloxy, halogen, ester, amine, substituted carbonyl and amide.

In some embodiments, the substituent number of the substituted aromatic compound is $\geq 1$, i.e, the substituted aromatic compound may be mono- or poly-substituted.

In some embodiments, when the aromatic composition includes an unsubstituted aromatic compound and substituted aromatic compound, the aromatic composition has a molar percent of the unsubstituted aromatic compound of 3% to 97% and a molar percent of the substituted aromatic compound of 3% to 97%.

In some embodiments, when the aromatic composition includes unsubstituted aromatic compound and substituted aromatic compound, the aromatic composition has a molar percent of the alkyl-substituted aromatic compound account of 10% to 90%, the alkoxy-substituted aromatic compound account of 20% to 80%, and the halogen-substituted aromatic compound of 5% to 40%.

In some embodiments, when the aromatic composition includes at least two substituted aromatic compounds, the aromatic composition, in mole percent, includes:

10% to 80% alkyl-substituted aromatic compound and 20% to 90% alkoxy-substituted aromatic compound; or,
50% to 95% of alkyl-substituted aromatic compound and 5% to 50% halogen-substituted aromatic compound; or,
60% to 95% alkoxy-substituted aromatic compound and 5% to 40% halogen-substituted aromatic compound; or,
10% to 90% of one kind of alkyl substituted aromatic compound and 10% to 90% of another kind of alkyl substituted aromatic compound;
20% to 50% alkyl substituted aromatic compound, 20% to 50% halogen substituted aromatic compound and 20% to 50% substituted-carbonyl substituted aromatic compound;
10% to 50% halogen-substituted aromatic compound and 50% to 90% substituted-carbonyl substituted aromatic compound;
20% to 50% substituted-carbonyl substituted aromatic compound, 20% to 50% alkoxy substituted aromatic compound and 20% to 50% halogen substituted aromatic compound;
50% to 95% alkoxy-substituted aromatic compound and 5% to 50% substituted-carbonyl substituted aromatic compound.

In some embodiments, the aromatic composition includes unsubstituted aromatic compound and at least two substituted aromatic compounds. Optionally, the substituted aromatic compound include alkyl-substituted aromatic compound and amine-substituted aromatic compound.

In some embodiments, the aromatic composition includes 20%-50% unsubstituted aromatic compound, 20%-50% alkyl-substituted aromatic compound, and 20%-50% substituted-carbonyl substituted aromatic compound.

In some embodiments, the lithiation solution is prepared primarily by mixing an organic solution of the aromatic composition and a lithium source.

In some embodiments, organic solvents comprised by the organic solution include at least one of ethers solvent, carbonates solvent, benzenes solvent and ketones solvent. Optionally, the ethers includes at least one of ethylene glycol dimethyl ether, tetrahydrofuran, propylene oxide and diethyl ether; the carbonate includes dimethyl carbonate; the benzenes solvent include at least one of benzene and toluene; and the ketones solvent includes at least one of acetone and methyl ethyl ketone.

In some embodiments, in the organic solution of the aromatic composition, the aromatic composition has a concentration of 0.2 mol/L to 2 mol/L.

In some embodiments, a method for preparing the organic solution of the aromatic composition includes dissolving the aromatic composition in an organic solvent. During the process of dissolving, a stirring treatment can be performed at the same time. Optionally, the time for the stirring treatment is 10 min-30 min.

In some embodiments, the lithium source includes at least one of lithium metal and lithium alloy having a lithium content greater than 40%. Optionally, the lithium source may be mixed with the organic solution of the aromatic composition in a form of powder, sheet, or bulk.

In some embodiments, the molar ratio of the lithium source (in mole of Li) to the aromatic composition is greater than 2.

In some embodiments, in the preparation of the lithiation solution, the temperature for mixing is 10° C-30° C, and the time for mixing is 5 min-10 min.

In some embodiments, the molar ratio of the Li-aromatic composition to the negative electrode raw material is (0.2 to 2):1. In some embodiments, the negative electrode raw material includes at least one of a silicon-based material, a carbon-based material, and a silicon-carbon composite material. Optionally, the negative electrode raw material includes silicon monoxide.

In some embodiments, the negative electrode raw material is added into the lithiation solution in a form of powder or plate to conduct the lithiation treatment. Optionally, the particle size of the negative electrode raw material in a form of powder is smaller than 50 $\mu$m.

In some embodiments, the lithiation treatment is conducted under stirring. Optionally, a manner for the stirring includes at least one of magnetic stirring, ultrasonic stirring and mechanical stirring. Optionally, a time for the stirring can be 15 min to 60 min.

In some embodiments, after the lithiation treatment, performing a solid-liquid separation, collecting the solid and then washing it to obtain the negative electrode material. Optionally, a method for performing the solid-liquid separation includes filtration. Optionally, the washing is performed with organic solvents.

In some embodiments, the method further includes: drying the negative electrode material obtained through lithiation treatment to obtain a pre-lithiated negative electrode material. Optionally, the drying is performed under protective gas. Optionally, the protective gas includes at least one of helium, neon, argon, krypton and xenon. Optionally, a time for the drying is 15 min-60 min.

In some embodiments, the preparation of the lithiation solution, the lithiation treatment and the like are performed under a protective gas. For example, they can be performed in a glove box in a protective gas atmosphere under normal temperature and normal pressure.

One embodiment of the present application provides a method for preparing a negative electrode material, comprising the following step:

conducting a lithiation treatment on a negative electrode raw material in a lithiation solution;
the lithiation solution comprises Li- aromatic composition;
wherein the aromatic composition comprises at least two aromatic compounds with different potentials.

In some embodiments, the potential range of the aromatic compound to lithium is 0 to 0.5V vs Li/Li$^+$.

In some embodiments, there is a potential gradient to lithium between the different aromatic compounds.

In some embodiments, the average potential difference to lithium possessed by the different aromatic compound ($\Delta$V vs Li/Li$^+$) satisfies: $0<\Delta V\leq0.3V$

In some embodiments, the average potential difference to lithium possessed by the different aromatic compound ($\Delta$V vs Li/Li$^+$) satisfies: $0<\Delta V\leq0.1V$

In the case where the aromatic composition includes unsubstituted aromatic compound and substituted aromatic compound, the unsubstituted aromatic compound and the substituted aromatic compound have different potentials; wherein the potential difference of the unsubstituted aromatic compound to lithium is 0 to 0.5V vs Li/Li$^+$, and the potential difference of the substituted aromatic compound to lithium is 0 to 0.5V vs Li/Li$^+$. There is potential gradient between Li-aromatic compound corresponding to the unsubstituted aromatic compound (i.e. Li-unsubstituted aromatic compound) and Li-aromatic compound corresponding to the substituted aromatic compound (i.e. Li-substituted aromatic compound). Each value of potential difference of the Li-unsubstituted aromatic compound and the Li-substituted aromatic compound to lithium ($\Delta$V vs Li/Li$^+$) respectively satisfies: $0<\Delta V\leq0.3V$

In the case where the aromatic composition includes at least two substituted aromatic compounds (here taking the aromatic composition includes two substituted aromatic compound as an example), one substituted aromatic compound and the other substituted aromatic compound have different potentials; wherein the potential difference of one substituted aromatic compound to lithium is 0 to 0.5V vs Li/Li$^+$, and the potential difference of the other substituted aromatic compound to lithium is 0 to 0.5V vs Li/Li$^+$. There is potential gradient between a Li-aromatic compound corresponding to the one substituted aromatic compound (i.e. Li-one substituted aromatic compound) and a Li-aromatic compound corresponding to the other substituted aromatic compound (i.e. Li- the other substituted aromatic compound). Each value of potential difference of the Li-one substituted aromatic compound and the Li-the other substituted aromatic compound to lithium ($\Delta$V vs Li/Li$^+$) respectively satisfies: 0<$\Delta$V$\leq$0.3V

Another embodiment of the present application provides a method for preparing a negative electrode material, comprising the following steps:

adding a lithium source to a mixed solution comprising an aromatic composition and an organic solvent to form a lithiation solution; the lithiation solution comprises Li-aromatic composition; wherein the aromatic composition comprises at least two aromatic compounds with different branched-chains; or the aromatic composition comprises an aromatic compound with branched-chains and an unmodified aromatic compound;

adding a negative electrode raw material in a form of powder to the lithiation solution and then drying to obtain a pre-lithiated negative electrode material.

In some embodiments, the aromatic compound includes at least one of benzene, biphenyl, terphenyl, naphthalene, anthracene, phenanthrene, pyrene and tetracene.

In some embodiments, the branched-chain includes at least one of alkanes branched-chain, ethers branched-chain, halogens branched-chain, esters branched-chain, amines branched-chain and benzene-containing branched-chain.

In some embodiments, the branched-chain includes the alkanes branched-chain, wherein the alkanes branched-chain includes at least one of -CH$_3$, -C$_2$H$_5$ and -C$_3$H$_7$.

In some embodiments, the branched-chain includes the ethers branched-chain, wherein the ethers branched-chain includes at least one of -OCH$_3$, -OCH$_2$CH$_3$ and -OC$_6$H$_5$.

In some embodiments, the branched-chain includes the halogens branched-chain, wherein the halogens branched-chain includes at least one of -Cl, -F, -Br and -I.

In some embodiments, the branched-chain includes the esters branched-chain, wherein the esters branched-chain includes at least one of benzyl esters branched-chain and benzoic ethers branched-chain.

In some embodiments, the branched-chain includes the amines branched-chain, wherein the amines branched-chain includes at least one of NH$_2$, -CH$_2$NH$_2$, -CH$_2$CH$_2$NH$_2$,-CH(CH$_3$)NH$_2$, -N(CH$_3$)$_2$, -NHCH$_2$CH$_3$, -NHCH$_2$CH$_2$CH$_3$ and -NHCOCH$_3$.

In some embodiments, the aromatic composition includes an aromatic compound having branched-chains and an unmodified aromatic compound.

In some embodiments, the molar ratio of the aromatic compound having branched-chains to the aromatic composition is 3% to 97%.

In some embodiments, the molar ratio of the aromatic compound having alkanes branched-chains to the aromatic composition is 10% to 90%.

In some embodiments, the molar ratio of the aromatic compound having ethers branched-chains to the aromatic composition is 20% to 80%.

In some embodiments, the molar ratio of the aromatic compound having halogens branched-chains to the aromatic composition is 5% to 40%.

In some embodiments, the aromatic composition includes at least two aromatic compounds with different branched-chains, and the combination of the aromatic compound with different branched-chains includes:

10% to 80% by mole of the aromatic compound having alkanes branched-chains and 20% to 90% by mole of the aromatic compound having ethers branched-chains; or
60% to 95% by mole of the aromatic compound having alkanes branched-chains and 5% to 40% by mole of the aromatic compound having halogens branched-chains; or
60% to 95% by mole of the aromatic compound having ethers branched-chains and 5% to 40% by mole of the aromatic compound having halogens branched-chains.

In some embodiments, the aromatic composition includes at least two aromatic compounds with different branched-chains and an unmodified aromatic compound.

In some embodiments, the aromatic composition includes at least two aromatic compounds with different branched-chains and an unmodified aromatic compound, wherein at least one of the aromatic compound has alkanes branched-chains or amines branched-chains.

In some embodiments, the organic solvent includes at least one of dimethyl ether, dimethyl carbonate, tetrahydrofuran, carbonates, toluene, benzene, ethyl ether, propylene oxide and ketones solvent.

In some embodiments, in the mixed solution, the aromatic compound has a concentration of 0.2 mol/L to 2 mol/L.

In some embodiments, the lithium source includes at least one of lithium metal and lithium alloy having a lithium content greater than 40%.

In some embodiments, the molar ratio of Li in the lithium source to the aromatic composition is greater than 2.

In some embodiments, the time for dissolving the lithium source is 5 min-10 min, and the temperature for dissolving the lithium source is 10° C-30° C.

In some embodiments, the molar ratio of the Li-aromatic composition to the negative electrode raw material in a form of powder is (0.2 to 2): 1.

In some embodiments, the negative electrode raw material in a form of powder includes at least one of a silicon-based material, a carbon-based material, and a silicon-carbon composite material.

In some embodiments, the particle size of the negative electrode raw material in a form of powder is smaller than 50 $\mu$m.

In some embodiments, a manner for the stirring includes at least one of magnetic stirring, ultrasonic stirring and mechanical stirring.

In some embodiments, a time for the stirring can be 15 min to 60 min.

In some embodiments, the drying is performed under protective gas, preferably, the protective gas includes at least one of helium, neon, argon, krypton and xenon.

In some embodiments, a time for the drying is 15 min-60 min.

In some embodiments, the method includes: adding a lithium source to a mixed solution comprising an aromatic composition and an organic solvent to form a lithiation solution; the lithiation solution comprises Li-aromatic composition; wherein the aromatic composition comprises an aromatic compound having alkanes branched-chains and an aromatic compound having halogens branched-chains; then adding silicon monoxide to the lithiation solution, stirring before filtering, washing with an organic solvent, filtering and drying to obtain a pre-lithiated silicon monoxide material.

The present disclosure also provides a negative electrode material comprising nano-silicon, a lithium siloxide compound and an aromatic composition; wherein the lithium siloxide compound comprises at least one of $Li_2Si_2O_5$, $Li_2SiO_3$ and $Li_4SiO_4$, and the aromatic composition is at least partially coated the nano-silicon and the lithium siloxide compound.

In some embodiments, the negative electrode material comprises an inner core and an aromatic composition layer.

In some embodiments, the inner core comprises the nano-silicon and the lithium siloxide compound.

In some embodiments, the nano-silicon is dispersed in the lithium siloxide compound.

In some embodiments, the inner core further comprises SiOx, wherein x satisfies: 0.4≤x≤1.6.

In some embodiments, the aromatic composition comprises at least two aromatic compounds with different potentials.

In some embodiments, the average potential difference to lithium possessed by the different aromatic compound ($\Delta$V vs Li/Li$^+$) satisfies: 0<$\Delta$V≤0.3V.

In some embodiments, the median size of the negative electrode material is 4 $\mu$m to 8 $\mu$m.

In some embodiments, the specific surface area of the negative electrode material is 1.5 m$^2$/g to 4.2 m$^2$/g.

In some embodiments, the pH of the negative electrode material is 10 to 11.5.

In some embodiments, the negative electrode material further includes a carbon coating layer, wherein the carbon coating layer covers the inner core.

In some embodiments, the negative electrode material further includes a carbon coating layer, wherein the aromatic composition is distributed on the surface of the inner core, in the pores of the carbon coating layer, and on the outer surface of the carbon coating layer.

In some embodiments, the coating amount of the aromatic composition in the negative electrode material is 0wt% to 2wt%.

The present disclosure also provides a negative electrode plate comprising a current collector and a negative electrode layer disposed on the surface of the current collector; wherein the negative electrode layer comprises the negative electrode materials obtained by any method for preparing the negative electrode material mentioned above or any negative electrode material mentioned above.

The present disclosure also provides a lithium-ion battery comprising any negative electrode plate described above.

In some embodiments, the lithium-ion battery further includes a positive plate, a separator and a non-aqueous electrolyte.

Beneficial effects of the present disclosure are as follows:

The aromatic compound can form a conjugated compound of lithium due to its conjugated $\pi$ bond, and the

potential difference between the conjugated compound of lithium and the material enable lithium ions to be inserted deep inside the material. In the technical solution of the present invention, a gradient channel of potential difference for lithium intercalation is constructed by the combinations of aromatic compounds with different potentials, such that the chemical intercalation of lithium ion can be carried out spontaneously and rapidly between the lithium source and the negative electrode raw material in an organic solvent, thereby improving the depth and efficiency of lithium intercalation effectively, reducing the loss of the irreversible capacity and improving the capacity of batteries.

**BRIEF DESCRIPTION OF DRAWINGS**

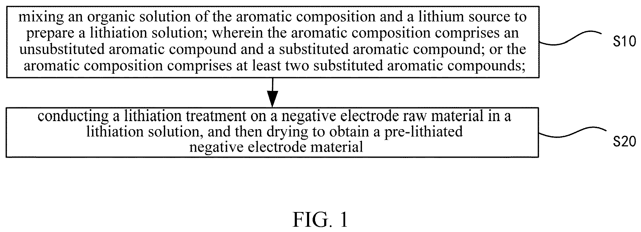

FIG. 1 is a schematic flow chart of the pre-lithiation treatment method for a negative electrode material used for lithium-ion batteries provided in the example of the present application.

**DESCRIPTION OF EMBODIMENTS**

The following are preferred embodiments of the examples of the present application. It should be pointed out that several improvements and modifications can also be made by those ordinary skilled in the art without departing from the principles of the embodiments of the present application, which are also regarded as fall within the protection scope of the embodiments of the present application.

In order to improve the depth and efficiency of lithium intercalation, reduce the loss of the irreversible capacity and improve the capacity of batteries, the embodiment of the present application provides a method for preparing a negative electrode material, comprising the following step:

conducting a lithiation treatment on a negative electrode raw material in a lithiation solution;
the lithiation solution comprises Li- aromatic composition;
wherein the aromatic composition comprises unsubstituted aromatic compound and substituted aromatic compound;
or the aromatic composition comprises at least two substituted aromatic compounds.

The Li-aromatic composition in the present disclosure refers to a complex of Li-aromatic compound formed by the lithium source and the aromatic compound in the aromatic composition.

It can be understood that the aromatic composition includes at least two aromatic compounds, wherein at least one of the aromatic compounds contains a substituent.

Specifically, with reference to Fig. 1, the method includes following steps:

Step S10: mixing an organic solution of the aromatic composition and a lithium source to prepare a lithiation solution; wherein the aromatic composition comprises an unsubstituted aromatic compound and a substituted aromatic compound; or the aromatic composition comprises at least two substituted aromatic compounds;
Step S20: conducting a lithiation treatment on a negative electrode raw material in a lithiation solution, and then drying to obtain a pre-lithiated negative electrode material.

In the technical solution of the present application, the pre-lithium reaction is adjusted to a solid-liquid reaction, the contact surface between lithium source and the negative electrode raw material is improved, the gradient of potential different is constructed, and the binding strength and mode between $\pi$ electron cloud and Li is changed through optimizing the substituted aromatic composition, resulting in the improvements in depth and efficiency of lithium intercalation. The conjugated compound formed by the aromatic compound and lithium metal will be dispersed in the organic solvent when dissolving the aromatic composition in an organic solvent system, and the electrochemical potential of the conjugated compound is between that of the lithium metal and that of the negative electrode raw material (such as silicon monoxide). With the help of the potential difference between the conjugated compound of lithium and the negative electrode raw material, lithium ions can be inserted deep inside the negative electrode raw material. Therefore, a gradient channel of potential difference for lithium intercalation is constructed by the combinations of aromatic compounds with different potentials, such that the chemical intercalation of lithium ion can be carried out spontaneously and rapidly between the lithium source and the negative electrode raw material in an organic solvent, thereby improving the depth and efficiency of lithium intercalation effectively, reducing the loss of the irreversible capacity and improving the capacity of batteries.

In some embodiments, the lithiation solution is prepared primarily by mixing an organic solution of the aromatic composition and a lithium source.

In some embodiments, the aromatic compound includes at least one of benzene, biphenyl, terphenyl, naphthalene, anthracene, phenanthrene, pyrene, tetracene, and pyridine.

In some embodiments, substituents of the substituted aromatic compound include at least one of alkyl, alkoxy, aryloxy, halogen, ester, amine, substituted-carbonyl and amide. For example, the substituted aromatic compound can be but not limited to dimethyl biphenyl, 2-methyl biphenyl, 2,6-lutidine, anisole, diphenyl ether, 4,4-difluorobenzophenone, 3-fluoroanisole, benzophenone, and the like.

In some embodiments, the alkyl includes at least one of straight-chain or branched-chain alkyl having 1 to 6 carbon atoms. Optionally, the alkyl includes at least one of straight-chain or branched-chain alkyl having 1 to 3 carbon atoms, such as methyl ($-CH_3$), ethyl ($-CH_2CH_3$), n-propyl ($-CH_2CH_2CH_3$) and/or isopropyl ($-CH(CH_3)_2$).

In some embodiments, the alkoxy includes at least one of straight-chain or branched-chain alkoxy having 1 to 4 carbon atoms. Optionally, the alkoxy includes methoxy ($-OCH_3$) and/or ethoxy ($-OC_2H_5$).

In some embodiments, the aryloxy includes phenoxy ($-OPh$).

In some embodiments, the halogen includes at least one of -F, -Cl, -Br and -I.

In some embodiments, the ester includes at least one of alkyl ester and aryl ester. Optionally, the ester is $-COOR_1$ or methyl formate group, wherein $R_1$ includes at least one of straight-chain or branched-chain alkyl, phenyl or benzyl having 1 to 3 carbon atoms. For example, the ester can be but not limited to $HCOOCH_2-$, $-COOCH_3$, $-COOCH(CH_3)_2$.

In some embodiments, the amine group includes at least one of $-NH_2$, $-R_2NH_2$, $-NHR_3$ and $-NR_4R_5$, wherein $R_2$ is at least one of alkylidene or substituted alkylidene having 1 to 3 carbon atoms, for example, $R_2$ can be $-CH_2-$, $-CH_2CH_2-$, $-CH_2CH_2CH_2-$, $-CH(CH_3)-$,$-C(CH_3)_2-$, $-CH(CH_3)CH_2-$, $-CH_2CH(CH_3)-$, etc., and $R_3$, $R_4$ and $R_5$ are at least one independently selected from the group consisting of straight-chain or branched-chain alkyl having 1 to 3 carbon atoms.

In some embodiments, the substituted carbonyl includes $-COR_6$, wherein $R_6$ includes at least one of straight-chain or branched-chain alkyl, phenyl or substituted phenyl having 1 to 6 carbon atoms. Optionally, for the type of the substituent of the substituted phenyl, refer to the type of the substituent of the substituted aromatic compound listed above, for example, the substituent of the substituted phenyl can be at least one of alkyl, alkoxy, aryloxy, halogen, ester, amine, substituted carbonyl and amide.

The substituent number of the substituted aromatic compound is $\geq 1$, i.e, the substituted aromatic compound may be mono- or poly-substituted. Herein, there is no limitation to the position of the substituent of the substituted aromatic compound. It should be noted that there is no limitation to the number of substituents of the substituted aromatic compound either, for example: when the aromatic compound is benzene, the number of substituents can be an integer between 1 and 6, such as 1, 2, 3 etc.; when the aromatic compound is biphenyl, the number of substituents can be an integer between 1 and 10, such as 1, 2, 3, 4, 5, etc.; when the aromatic compound is terphenyl, the number of substituents can be an integer between 1 and 14, such as 1, 2, 3, 4, 5, 6, 7, etc.; when the aromatic compound is naphthalene, the number of substituents can be an integer between 1 and 8, such as 1, 2, 3, 4, etc.; when the aromatic compound is anthracene, the number of substituents can be an integer between 1 and 10, such as 1, 2, 3, 4, 5, etc.; when the aromatic compound is phenanthrene, the number of substituents can be an integer between 1 and 10, such as 1, 2, 3, 4, 5, etc.; when the aromatic compound is pyrene, the number of substituents can be an integer between 1 and 10, such as 1, 2, 3, 4, 5, etc.; when the aromatic compound is tetracene, the number of substituents can be an integer between 1 and 12, such as 1, 2, 3, 4, 5, 6, etc.; and when the aromatic compound is pyridine, the number of substituents can be an integer between 1 and 5 , such as can be 1, 2, 3 etc.

In some embodiments, when the aromatic composition includes unsubstituted aromatic compound and substituted aromatic compound, the aromatic composition has a molar percent of the unsubstituted aromatic compound of 3% to 97% and the substituted aromatic compound of 3% to 97%.

The unsubstituted aromatic compound which have high potential may lead to a low efficiency of lithium intercalation, and finally a low initial coulombic efficiency of the negative electrode material obtained through pre-lithiated. However, the present inventor enable it possible to lithiate deeply, and improve the efficiency of the pre-lithiated and the initial coulombic efficiency of the pre-lithiated material by combining the unsubstituted aromatic compound with substituted aromatic compound, by which the spatial distribution of $\pi$-electron density are adjusted and chemical potential gradient differences can be constructed. In a specific implementation manner, the depth of lithium intercalation can be improved by adjusting the types of substituents to change the strength of the chemical reaction between the aromatic composition and lithium. This kind of solid-liquid chemical pre-lithiated has less heat generation, mild reaction process and good pre-lithiated effect, and is suitable for applying to negative electrode raw material in a form of powder or plate.

Compared to using a single substituted aromatic compound, the use of the combination of the substituted aromatic compound and the unsubstituted aromatic compound can reduce the required amount of lithium metal, which can not only reduce the production cost, but also improve the pre-lithiated effect of the negative electrode raw material (such as silicon monoxide).

In some embodiments, when the aromatic composition includes unsubstituted aromatic compound and substituted aromatic compound, the aromatic composition, in mole percent, includes but not limit to 3%, 10%, 20%, 30%, 40%, 50%, 60%, 70%, 80%, 90%, 97%, etc. of substituted aromatic compounds.

In some embodiments, when the aromatic composition includes unsubstituted aromatic compounds and substituted aromatic compounds, the aromatic composition, in mole percent, includes:

10% to 90% of alkyl-substituted aromatic compounds, and 10% to 90% of unsubstituted aromatic compounds; or 20% to 80% of alkoxy-substituted aromatic compounds, and 20% to 80% of unsubstituted aromatic compounds; or 5% to 40% of halogen-substituted aromatic compounds, and 60% to 95% of unsubstituted aromatic compounds.

Optionally, when the aromatic composition includes unsubstituted aromatic compounds and alkyl-substituted aromatic compounds, the aromatic composition, in mole percent, includes but not limit to 10%, 20%, 30%, 40%, 50%, 60%, 70%, 80%, 90% etc. of the alkyl-substituted aromatic compounds.

Optionally, when the aromatic composition includes unsubstituted aromatic compounds and alkoxy-substituted aromatic compounds, the aromatic composition, in mole percent, includes but not limit to 20%, 30%, 40%, 50%, 60%, 70%, 80% etc. alkoxy-substituted aromatic compounds.

Optionally, when the aromatic composition includes unsubstituted aromatic compounds and halogen-substituted aromatic compounds, the aromatic composition, in mole percent, includes but not limit to 5%, 10%, 15%, 20%, 25%, 30%, 35%, 40% etc. halogen-substituted aromatic compounds.

In some embodiments, when the aromatic composition includes at least two substituted aromatic compounds, the aromatic composition, in mole percent, can specifically include:

10% to 80% of the alkyl-substituted aromatic compounds and 20% to 90% of the alkoxy-substituted aromatic compounds; or,

60% to 95% of the alkyl-substituted aromatic compounds and 5% to 40% of the halogen-substituted aromatic compounds; or,

60% to 95% of the alkoxy-substituted aromatic compounds and 5% to 40% halogen-substituted aromatic compounds; or,

10% to 90% of one alkyl substituted aromatic compound and 10% to 90% of another alkyl substituted aromatic compound;

20% to 50% of the alkyl substituted aromatic compounds, 20% to 50% of the halogen substituted aromatic compounds and 20% to 50% substituted-carbonyl substituted aromatic compounds;

10% to 50% of the halogen-substituted aromatic compounds and 50% to 90% of the substituted-carbonyl substituted aromatic compounds;

20% to 50% of the substituted-carbonyl substituted aromatic compounds, 20% to 50% of the alkoxy substituted aromatic compounds and 20% to 50% of the halogen substituted aromatic compounds;

50% to 95% of the alkoxy-substituted aromatic compounds and 5% to 50% of the substituted-carbonyl substituted aromatic compounds.

Optionally, when the aromatic composition includes alkyl-substituted aromatic compounds and alkoxy-substituted aromatic compounds, the aromatic composition, in mole percent, includes but not limit to 10%, 20%, 30%, 40%, 50%, 60%, 70%, 80% etc. of the alkyl-substituted aromatic compounds.

Optionally, when the aromatic composition includes alkyl-substituted aromatic compounds and halogen-substituted aromatic compounds, the aromatic composition, in mole percent, includes but not limit to 60%, 65%, 70%, 75%, 80%, 85%, 90%, 95% etc. of the alkyl-substituted aromatic compounds.

Optionally, when the aromatic composition includes alkoxy-substituted aromatic compounds and halogen-substituted aromatic compounds, the aromatic composition, in mole percent, includes but not limit to 60%, 65%, 70%, 75%, 80%, 85%, 90%, 95% etc. of the alkoxy-substituted aromatic compound.

Optionally, when the aromatic composition includes two kinds of alkyl-substituted aromatic compounds, the aromatic composition, in mole percent, includes but not limit to 10%, 20%, 30%, 40%, 50%, 60%, 70%, 80%, 90% etc. of one alkyl-substituted aromatic compound.

In some embodiments, the aromatic composition includes an unsubstituted aromatic compound and at least two substituted aromatic compounds.

In some embodiments, the aromatic composition includes an unsubstituted aromatic compound and at least two substituted aromatic compounds, wherein the substituted aromatic compounds include alkyl-substituted aromatic compounds and amine-substituted aromatic compounds. The more the combinations of the aromatic compounds, the smaller the restriction on the mole collocation, the reasons therefor lie in that the subdivision of the potential gradient makes the energy level of the electron orbital hybridization is subdivided, and the energy barrier for electron transition and transfer is reduced, and thus the efficiency of lithium intercalation is improved.

In some embodiments, the aromatic composition includes, in mole percent, 20% to 50% of the unsubstituted aromatic compounds, 20% to 50% of the alkyl-substituted aromatic compounds, and 20% to 50% of the substituted-carbonyl substituted aromatic compounds.

It should be noted that the mole percent herein refers to the mole proportion of a certain type of substituted aromatic compound in all aromatic compounds with different substitutions. Certainly, it can also be, but not limited to the mole proportion of a combination of an aromatic compound having substituent alkyl A and an aromatic compound having substituent alkyl B, or a combination of an aromatic compound having substituent alkoxy C and an aromatic compound having substituent alkoxy D.

Specifically, the alkyl- or alkoxy-substituted aromatic compounds have lower potential compared to that of the halogen-substituted aromatic compounds. Therefore, the mole proportion of the halogen-substituted aromatic compounds with high potential is set to be less than that of the alkoxy- or alkyl-substituted aromatic compounds. In addition, as the aromatic compounds substituted with different alkoxy groups have large potential fluctuations, a bigger room to adjust the potential may be obtained by combining the alkoxy-substituted aromatic compounds with the alkyl-substituted aromatic compounds having lower potential.

It should be noted that when the structure of a substituted aromatic compound contains two or more (including two) different substituents at the same time, the substituent with the higher potential is used for classification (the order of the potential for the substituents is: halogen>carbonyl> alkoxy >alkyl). For example, in the structure of 3-fluoroanisole both halogen -F and -OCH3 exist, then it is classified as a halogen-substituted aromatic compound; additionally, in the structure of 4,4-difluorobenzophenone both halogen -F and substituted carbonyl exist, then it is classified as a halogen-substituted aromatic compound.

It should be noted that alkyl-substituted aromatic compounds, alkoxy-substituted aromatic compounds, halogen-substituted aromatic compounds, and aromatic compounds containing the above-mentioned substitutions, due to the difference in their substituents, have different potentials and potential differences to lithium, based on which a potential gradient and channels for lithium intercalation are constructed, thereby the efficiency of lithium intercalation is finally improved.

In the technical solution of the present application, by combining aromatic hydrocarbon compounds with substituents such as halogen, alkyl, alkoxy, ester, and amine, the distribution of $\pi$-conjugated electrons can not only be changed, the affection on lithium complex structure and position, the construction of a channel for chemical lithium intercalation and the avoiding of the reaction between the lithium metal and the substituents (for example, lithium can react with hydroxyl or carboxyl to produce hydrogen) can also be realized.

The preparation method of the present application is explained in detail as follows:

Step S10: adding a lithium source to an organic solution of the aromatic composition to prepare a lithiation solution, the lithiation solution comprises a complex of Li-aromatic compounds; wherein the aromatic composition comprises unsubstituted aromatic compounds and substituted aromatic compounds; or the aromatic composition comprises at least two substituted aromatic compounds.

In a specific embodiment, the organic solvent contained in the organic solution includes at least one of ethers solvent, carbonates solvent, benzenes solvent and ketones solvent. Optionally, the ethers solvent include at least one of ethylene glycol dimethyl ether, tetrahydrofuran, propylene oxide and diethyl ether; the carbonates solvent include dimethyl carbonate; the benzenes solvent include at least one of benzene and toluene; the ketones solvent include at least one of acetone and methyl ethyl ketone.

The preparation method for the organic solution of the aromatic composition includes dissolving the aromatic composition in an organic solvent. During the dissolving process, a stirring can be accompanied to improve the uniformity of the solution, and a manner for the stirring includes at least one of magnetic stirring, ultrasonic stirring and mechanical stirring. Optionally, a time for the stirring can be 10min to 30min.

In the organic solution of the aromatic composition, the aromatic compound has a concentration of 0.2 mol/L to 2 mol/L. Specifically, the concentration of the concentration can be but not limited to 0.2 mol/L, 0.4 mol/L, 0.6 mol/L, 0.8 mol/L, 1.2 mol/L, 1.5 mol/L or 2 mol/L, other concentrations within the range but not listed here are also applicable.

Understandably, when a single-component aromatic compound is used, a high concentration of the aromatic compound in the solution for pre-lithiation is required to improve the pre-lithiation efficiency, resulting a huge amount consumption of the aromatic compound; while when the aromatic composition of the present application is used, the concentration of the aromatic compound required can be reduced effectively, thereby reducing the loss of aromatic compounds in the process of material pre-lithiation, and reducing the cost of pre-lithiation.

Two stages of reaction occur after adding the lithium source to the organic solution. For the first stage, the lithium metal source (solid phase) reacts with the aromatic compound (liquid phase) in the organic solution to form a metal complex (a complex of Li-aromatic compound), thereby the lithium metal source is dissolved in the organic solvent and becomes a liquid lithium source. Second, the lithiated aromatic compounds (a complex of Li-aromatic compound) has multiple potential gradients due to their different substituents, which can effectively reduce the difficulty of Li migration and maintain the lithium concentration near the interface in the reaction to prelithiate SiO, thereby realizing an efficient and deep lithium intercalation.

In some embodiments, the lithium source includes at least one of lithium metal and lithium alloy having a lithium content greater than 40%. Optionally, the lithium source may be mixed with the organic solution of the aromatic composition in a form of powder, sheet, or bulk.

The molar ratio of the lithium source (in mole of Li) to the aromatic composition is greater than 2, further it can be greater than or equal to 4; the molar ratio may specifically be 4, 5, 6, 7, and the like. Understandably, when the molar ratio of the lithium source to the aromatic composition is greater than or equal to 4, excessive lithium source can be ensured and the metal complex (a complex of Li-aromatic compound) can reach the saturation state quickly in the lithiation solution, such that the materials requiring pre-lithiation treatment can be pre-lithiated fully and achieve the target initial coulombic efficiency and improved efficiency.

For the process of dissolving the lithium source in the organic solution, in a specific embodiment, the time for dissolving the lithium source is 5 min to 10 min, specifically 5 min, 6 min, 7 min, 8 min, 9 min, 10 min, etc. The temperature for dissolving the lithium source is room temperature, 10°C to 30 °C, specifically the temperature can be but not limited to 10 °C, 15 °C, 20 °C, 25 °C, 30 °C, etc., other temperatures within the range but not listed here are also applicable.

It should be noted that organic solvents and organic compounds should be mixed in liquid phase within the dissolution temperature range.

Optionally, a stirring can be performed after the lithium source is added to the organic solution to enable the lithium source and the organic solution are mixed more uniformly, and the added negative electrode raw material can be subjected to surface lithiation treatment more uniformly.

Step S20: adding a negative electrode raw material to a lithiation solution, and then drying to obtain a pre-lithiated negative electrode material.

Understandably, the lithiation solution in the liquid phase contains the complex of Li-aromatic compound, which can maximize the reaction interface of the negative electrode raw material, increase the reaction area, and reduce the transport resistance of lithium ions; during the lithiated reaction, $Li^+$ will be released from the aromatic compound into the powder material, and a redox reaction will occur. The pre-lithiated efficiency of the negative electrode raw material is regulated by the combination of the complex of Li-aromatic compound with different potential differences to achieve deep lithium intercalation.

In a specific embodiment, the negative electrode raw material includes at least one of a silicon-based material, a carbon-based material, and a silicon-carbon composite material. Specifically, the silicon-based material can be silicon oxide, silicon, and silicon monoxide; the carbon-based material can be graphite, and the silicon-carbon composite material can be SiOx@C, Si@C, and the like. Specifically, when the negative electrode raw material is SiO@C, the lithium source undergoes a lithiated reaction after the complex of Li-aromatic compound is immersed in the carbon layer, and at the same time, the aromatic compound is partially deposited on the surface of silicon particles in the inner core, the micropores and the outer surface of the carbon coating layer to form an stack layer of aromatic compounds, which will form an organic polymer crystalline layer after evaporating the solvent. During the formation of the organic polymer crystalline layer, a large amount of conjugated Li source is encapsulated. In this regard, these accumulated organolithium compounds will become part of the SEI layer during the formation process, by which the consumption of other active lithium can be reduced, and the loss of the initial coulombic efficiency during the formation process can be decreased and the efficiency can be improved accordingly.

In other embodiments, adding negative electrode raw material to the lithiation solution, stirring before filtering, washing with an organic solvent, filtering and drying to obtain a pre-lithiated negative electrode material. Optionally, adding silicon monoxide to the lithiation solution, stirring before filtering, washing with an organic solvent, filtering and drying to obtain a pre-lithiated silicon monoxide material.

When the negative electrode raw material is SiO, lithium will be intercalated to a deeper extent and in a larger amount, and forms a dense organic layer on the surface of SiO. This organic layer will be carbonized at the high temperature used in the subsequent process of carbon coating, thereby a carbon layer with special functional groups and doping element distribution will be formed inside. These doping elements can be dispersed at the atomic level and improve the conductivity of the carbon layer.

The molar ratio of the lithium source to the negative electrode raw material is greater than 2; the molar ratio may specifically be 2, 3, 4, 5, 6, 7, and the like. Understandably, when the molar ratio of the lithium source to the negative electrode raw material is greater than or equal to 2, excessive lithium source can be ensured and the metal complex (a complex of Li-aromatic compound) can reach the saturation state quickly in the lithiation solution, such that the negative electrode raw material requiring pre-lithiation treatment can be pre-lithiated fully and achieve the target initial coulombic efficiency and improved efficiency.

In some embodiments, the negative electrode raw material is added into the lithiation solution in a form of powder or plate to conduct the lithiation treatment. Optionally, the particle size of the negative electrode raw material in a form of powder is smaller than 50 $\mu$m. Specifically, the particle size can be but not limited to 1 nm, 3 nm, 5 nm, 10 nm, 50 nm, 0.1 $\mu$m, 1 $\mu$m, 10 $\mu$m, 20 $\mu$m, 30 $\mu$m or 40 $\mu$m, etc., and other the particle sizes within the range but not listed here are also applicable. The specific surface area of the negative electrode raw material decreases with the increase of the particle size, which in turn results in a decrease in the efficiency of lithium intercalation. By employing the combination mode of the aromatic composition provided in the present application, the applicable range of the powder particle size can be expanded while ensuring a certain lithium intercalation efficiency. Generally speaking, the smaller the median size of the negative electrode raw material, the better, however, the negative electrode raw material with the median size of 1 nm to 10 nm is preferable based on the consideration of process cost.

The molar ratio of the complex of Li-aromatic compound to the negative electrode raw material is (0.2 to 2):1; specifically, the molar ratio can be 0.2:1, 0.4:1, 0.5:1, 0.8:1, 1:1, 1.2:1, 1.5:1, 1.8:1 or 2:1, etc., in this regard, a pre-lithiation treatment can be achieved in high-efficiency at a relatively low ratio. With a low molar ratio, such as a molar ratio of 0.46 of the complex of Li-aromatic compound to the negative electrode raw material, the initial coulombic efficiency of the pre-lithiated negative electrode material can also reach more than 90% in a short time (30min). It can be seen the efficiency of the pre-lithiation treatment on the negative electrode material has been improved significantly.

In some embodiments, a stirring is performed after adding the negative electrode raw material to the lithiation solution, and a manner for the stirring includes at least one of magnetic stirring, ultrasonic stirring and mechanical stirring. Optionally, a time for the stirring can be 15 min to 60 min. Specifically, the time for the stirring can be but not limited to 15 min, 20 min, 25 min, 30 min, 35 min, 40 min, 45 min, 50 min, 55 min, 60 min, etc., and other times within the range but not listed here are also applicable. In a specific embodiment, the corresponding time for stirring can be selected according to the combination of the aromatic composition. Generally speaking, the longer the time for stirring is, the more sufficient the reaction is, and the more favorable it is to reach the limit amount of pre-lithiation that the combination of the aromatic composition can achieve, thereby enable the obtained material to achieve the target initial coulombic efficiency.

After stirring, filtering and washing with an organic solvent; the organic solvent used for the washing can include at least one of the organic solvents used for preparing the organic solution.

The drying is performed under protective gas, wherein the protective gas includes at least one of helium, neon, argon, krypton and xenon.

A time for the drying is 15 min-60 min. specifically, the time for the drying can be 15 min, 20 min, 25 min, 30 min, 35 min, 40 min, 45 min, 50 min, 55 min, 60 min, etc. The drying treatment is beneficial to volatilize the solvent on the surface of the material. Considering the volatilization rate of the solvent, controlling the drying time within the above range is beneficial to improve the preparation efficiency.

Optionally, the drying can be natural air drying performed in a glove box in a argon atmosphere under normal temperature and normal pressure. The $O_2$ content in the glove box is less than 0.1 ppm, and the $H_2O$ content is less than 0.01 ppm. Alternatively, dry argon gas is used to purge the powder material for 10 to 30 minutes to completely volatilize the organic solvent adhering to the surface of the material to obtain dry pre-lithiated powder.

One embodiment of the present application provides a method for preparing a negative electrode material, comprising the following step:

> conducting a lithiation treatment on a negative electrode raw material in a lithiation solution;
> the lithiation solution comprises Li- aromatic composition;
> wherein the aromatic composition comprises at least two aromatic compounds with different potentials.

In some embodiments, the potential range of the aromatic compound to lithium is 0 to 0.5V vs Li/Li$^+$. The potential of the aromatic compound to lithium is determined with reference to lithium using 4X4X4 bulk lithium model in which the K point distribution in the Brillouin zone is set to 9X9X9. A gradient channel of potential difference for lithium intercalation is constructed by the combinations of aromatic compounds, such that the deep lithium intercalation and pre-lithiation in high efficiency are achieved, and the initial coulombic efficiency of the obtained material is improved.

In some embodiments, there is a potential gradient to lithium between the different aromatic compounds.

In some embodiments, the average potential difference to lithium possessed by the different aromatic compounds ($\Delta V$ vs Li/Li$^+$) satisfies: $0<\Delta V \leq 0.3V$

In some embodiments, the average potential difference to lithium possessed by the different aromatic compounds ($\Delta V$ vs Li/Li$^+$) satisfies: $0<\Delta V \leq 0.1V$

Embodiment of the present disclosure also provide a negative electrode material comprising nano-silicon, a lithium siloxide compound and an aromatic composition; wherein the lithium siloxide compound comprises at least one of $Li_2Si_2O_5$, $Li_2SiO_3$ and $Li_4SiO_4$, and the aromatic composition is at least partially coated the nano-silicon and the lithium siloxide compound.

In the above solution, the negative electrode raw material will undergo pre-lithiation treatment. And during pre-lithiation treatment on the negative electrode raw material, more lithium ions can be embedded in the silicon-oxygen negative electrode raw material in improved depth and efficiency of lithium intercalation. During the charging and discharging process, lithium ions will be released from the aromatic compound into the silicon-oxygen material, then a redox reaction which can replace the oxygen in the silicon-oxygen negative electrode raw material will occur, and some residual alkali will be formed on the surface of the silicon-oxygen material, thereby the water processing performance of the material is improved, the loss of the irreversible capacity can be reduced , and the capacity of batteries increased.

In some embodiments, the negative electrode material comprises an inner core and an aromatic composition layer.

In some embodiments, the inner core comprises the nano-silicon and the lithium siloxide compound.

In some embodiments, the nano-silicon is dispersed in the lithium siloxide compound.

In some embodiments, the inner core further comprises SiOx, wherein x satisfies: $0.4 \leq x \leq 1.6$.

In some embodiments, the aromatic composition comprises at least two aromatic compounds with different potentials.

In some embodiments, the average potential difference to lithium possessed by the different aromatic compounds ($\Delta V$ vs Li/Li$^+$) satisfies: $0 < \Delta V \leq 0.3V$ Specifically, the value can be but not limited to 0.05V, 0.1V, 0.15V, 0.2V, 0.25V, 0.3V, etc.

In some embodiments, the median size of the negative electrode material is 4 $\mu$m to 8 $\mu$m. Specifically, the median size can be but not limited to 4 $\mu$m, 5 $\mu$m, 6 $\mu$m, 7 $\mu$m, 8 $\mu$m, etc. It is beneficial to improve the cyclic performance of the negative electrode material by controlling the median size of the negative electrode material within the above range.

In some embodiments, the specific surface area of the negative electrode material is 1.5 m$^2$/g to 4.2 m$^2$/g. Specifically, the specific surface area can be but not limited to 1.5m$^2$/g, 1.8m$^2$/g, 2m$^2$/g, 2.5m$^2$/g, 3m$^2$/g, 3.5m$^2$/g, 4m$^2$/g, 4.2m$^2$/g, etc. It is beneficial to improve the cyclic performance of the negative electrode material by controlling the specific surface area of the negative electrode material within the above range.

In some embodiments, the pH of the negative electrode material is 10 to 11.5. Specifically, the pH can be 10, 10.1, 10.2, 10.3, 10.4, 10.5, 10.6, 10.8, 11, 11.2, 11.5, etc. It can be understood that the material can be kept at a low alkaline level, the water processing performance of the material can be improved, and the initial coulombic efficiency of the negative electrode material can be improved by controlling the pH of the negative electrode material within the above range.

In some embodiments, the negative electrode material further includes a carbon coating layer.

In some embodiments, the negative electrode material further includes a carbon coating layer, wherein the carbon coating layer covers the inner core.

In some embodiments, the negative electrode material further includes a carbon coating layer, wherein the aromatic composition is distributed on the surface of the inner core, in the pores of the carbon coating layer, and on the outer surface of the carbon coating layer.

In some embodiments, the coating amount of the aromatic composition in the negative electrode material for a lithium-ion battery is 0 wt% to 2 wt%. Specifically, the coating amount can be but not limited to 0.1 wt%, 0.3 wt%, 0.5 wt%, 0.7 wt%, 1 wt%, 1.2 wt%, 1.4 wt%, 1.5 wt%, 1.6 wt%, 1.8 wt%, 2 wt%, etc.

The present disclosure also provides a negative electrode plate comprising a current collector and a negative electrode layer disposed on the surface of the current collector; wherein the negative electrode layer comprise the negative electrode materials obtained by any method for preparing the negative electrode material mentioned above or any negative electrode material for a lithium-ion battery mentioned above.

The present disclosure also provides a lithium-ion battery comprising any negative electrode plate described above.

In some embodiments, the lithium-ion battery further includes a positive plate, a separator and a non-aqueous electrolyte.

The embodiments of the present application will be further described below in terms of multiple examples. The embodiments of the present application are not limited to the following specific examples. The embodiments can be appropriately implemented with changes within the scope of protection.

**Example 1**

This example provided a pre-lithiated method for a negative electrode material for a lithium-ion battery, including the following steps:

1) benzophenone (BP), dimethyl biphenyl (4,4-DMBP) and 4,4-difluorobenzophenone (4,4-DFBP) were mixed in a molar ratio of 1:1:1 to obtain an aromatic aromatic composition, then 0.1 mol of the aromatic composition was dissolved in 200 mL ethylene glycol dimethyl ether (DME), and treated with magnetic stirring for 30 min to obtain an organic solution of the aromatic composition;

2) 0.45mol of lithium flakes with a lithium content greater than 99.5% was added to the organic solution of the aromatic composition, left for 10min to allow the lithium fully be dissolved to form a lithiation solution, the average potential difference to lithium possessed by different aromatic compounds was 0.071V vs Li/Li$^+$;

3) 10g SiO powder was added to 200 mL of the lithiation solution, and then treated with magnetic stirring for 30 min (experimental group 1) or 60 min (experimental group 2), filtrated by suction filtration and washed with anhydrous ethanol for 3 times, the filtrated materials were placed in a glove box for natural volatilization and drying for 30 min to obtain pre-lithiated SiO powder, denoted as S1 and S101 respectively.

The negative electrode material prepared in this example comprises an inner core and an aromatic composition layer, the aromatic composition layer is at least partially coated the inner core; the inner core comprises the Si, SiOx and lithium silicates; the aromatic composition layer comprises BP, 4,4-DMBP and 4,4-DFBP; in the negative electrode material, the coating amount of the aromatic composition is 0.5wt%.

The potential of the above-mentioned various aromatic compounds to lithium can be determined according to the following method: with reference to lithium, 4X4X4 bulk lithium model is used in which the K point distribution in the Brillouin zone is set to 9X9X9. The intrinsic lithium potential of the aromatic compounds can be obtained according to an equation of $E=-\Delta G/n$, where $\Delta G$ represents the reaction energy (unit: eV) of the aromatic compounds in the lithiation reaction, n represents the number of electrons transferred in the lithiation reaction, and E represents the intrinsic lithium potential. All values are performed with the open source software QUANTUM-ESPRESSO, which is a density functional calculation software based on plane-wave sets. The aromatic compounds and the lithiated compounds thereof were calculated by a single-molecule model. PBE/GGA method is used for potential estimation, and Gamma point is used for energy calculation. The convergence threshold of the model is below 1.0E-5 eV/cell, and the convergence threshold of the intermolecular interaction force is 0.02eV/Å3. The influence of electron spin should be considered during the calculation. Finally, the weak interaction energy between atoms (molecules) is simulated by the DFT-D3(0) method. The average potential difference to lithium is the difference in the intrinsic lithium potential of aromatic compounds.

**Example 2**

This example provided a pre-lithiated method for a negative electrode material for a lithium-ion battery with reference to Example 1, and the difference therebetween lied in that benzophenone (BP), dimethyl biphenyl (4,4-DMBP) and 4,4-difluorobenzophenone (4,4-DFBP) were mixed in a molar ratio of 1:2:1 to obtain an aromatic aromatic composition.

The obtained pre-lithiated SiO powder was denoted as S2, and the average potential difference to lithium possessed by different aromatic compounds is 0.076V.

The negative electrode material prepared in this example comprises an inner core and an aromatic composition layer, the aromatic composition layer is at least partially coated the inner core; the inner core comprises the Si, SiOx and lithium silicates; the aromatic composition layer comprises BP, 4,4-DMBP and 4,4-DFBP; in the negative electrode material, the coating amount of the aromatic composition is 0.3wt%.

**Example 3**

This example provided a pre-lithiated method for a negative electrode material for a lithium-ion battery with reference to Example 1, and the difference therebetween lied in that dimethyl biphenyl (4,4-DMBP) and 4,4-difluorobenzophenone (4,4-DFBP) were mixed in a molar ratio of 1: 1 to obtain an aromatic aromatic composition.

The obtained pre-lithiated SiO powder was denoted as S3, and the average potential difference to lithium possessed by different aromatic compounds is 0.128V.

The negative electrode material prepared in this example comprises an inner core and an aromatic composition layer, the aromatic composition layer is at least partially coated the inner core; the inner core comprises the Si, SiOx and lithium silicates; the aromatic composition layer comprises 4,4-DMBP and 4,4-DFBP; in the negative electrode material, the coating amount of the aromatic composition is 0.1wt%.

**Example 4**

This example provided a pre-lithiated method for a negative electrode material for a lithium-ion battery with reference to Example 1, and the difference therebetween lied in that benzophenone (BP) and 4,4-difluorobenzophenone (4,4-DFBP) were mixed in a molar ratio of 1:1 to obtain an aromatic aromatic composition.

The obtained pre-lithiated SiO powder was denoted as S4, and the average potential difference to lithium possessed by different aromatic compounds is 0.152V.

The negative electrode material prepared in this example comprises an inner core and an aromatic composition layer, the aromatic composition layer is at least partially coated the inner core; the inner core comprises the Si, SiOx and lithium silicates; the aromatic composition layer comprises BP and 4,4-DFBP; in the negative electrode material, the coating amount of the aromatic composition is 0.1 wt%.

**Example 5**

This example provided a pre-lithiated method for a negative electrode material for a lithium-ion battery with reference to Example 1, and the difference therebetween lied in that benzophenone (BP) and 4,4-difluorobenzophenone (4,4-DFBP) were mixed in a molar ratio of 2:1 to obtain an aromatic aromatic composition.

The obtained pre-lithiated SiO powder was denoted as S5, and the average potential difference to lithium possessed by different aromatic compounds is 0.133V.

The negative electrode material prepared in this example comprises an inner core and an aromatic composition layer, the aromatic composition layer is at least partially coated the inner core; the inner core comprises the Si, SiOx and lithium silicates; the aromatic composition layer comprises BP and 4,4-DFBP; in the negative electrode material, the coating amount of the aromatic composition is 0.3wt%.

**Example 6**

This example provided a pre-lithiated method for a negative electrode material for a lithium-ion battery with reference to Example 1, and the difference therebetween lied in that benzophenone (BP), anisole and 3-fluoroanisole were mixed in a molar ratio of 1:1:1 to obtain an aromatic aromatic composition.

The obtained pre-lithiated SiO powder was denoted as S6, and the average potential difference to lithium possessed by different aromatic compounds is 0.090V.

The negative electrode material prepared in this example comprises an inner core and an aromatic composition layer, the aromatic composition layer is at least partially coated the inner core; the inner core comprises the Si, SiOx and lithium silicates; the aromatic composition layer comprises BP, anisole and 3-fluoroanisole; in the negative electrode material, the coating amount of the aromatic composition is 0.2wt%.

**Example 7**

This example provided a pre-lithiated method for a negative electrode material for a lithium-ion battery with reference to Example 1, and the difference therebetween lied in that benzophenone (BP), anisole and diphenyl ether were mixed in a molar ratio of 1:1:1 to obtain an aromatic aromatic composition.

The obtained pre-lithiated SiO powder was denoted as S7, and the average potential difference to lithium possessed by different aromatic compounds is 0.094V.

The negative electrode material prepared in this example comprises an inner core and an aromatic composition layer, the aromatic composition layer is at least partially coated the inner core; the inner core comprises the Si, SiOx and lithium silicates; the aromatic composition layer comprises BP, anisole and diphenyl ether; in the negative electrode material, the coating amount of the aromatic composition is 0.4wt%.

**Example 8**

This example provided a pre-lithiated method for a negative electrode material for a lithium-ion battery with reference to Example 1, and the difference therebetween lied in that benzophenone (BP) and anisole were mixed in a molar ratio of 1:1 to obtain an aromatic aromatic composition.

The obtained pre-lithiated SiO powder was denoted as S8, and the average potential difference to lithium possessed by different aromatic compounds is 0.121V.

The negative electrode material prepared in this example comprises an inner core and an aromatic composition layer, the aromatic composition layer is at least partially coated the inner core; the inner core comprises the Si, SiOx and lithium silicates; the aromatic composition layer comprises aromatic compounds BP and anisole; in the negative electrode material, the coating amount of the aromatic composition is 0.2wt%.

**Example 9**

This example provided a pre-lithiated method for a negative electrode material for a lithium-ion battery with reference to Example 1, and the difference therebetween lied in that benzophenone (BP) and 3-fluoroanisole were mixed in a molar ratio of 1:1 to obtain an aromatic aromatic composition.

The obtained pre-lithiated SiO powder was denoted as S9, and the average potential difference to lithium possessed by different aromatic compounds is 0.169V.

The negative electrode material prepared in this example comprises an inner core and an aromatic composition layer, the aromatic composition layer is at least partially coated the inner core; the inner core comprises the Si, SiOx and lithium silicates; the aromatic composition layer comprises BP and 3-fluoroanisole; in the negative electrode material, the coating amount of the aromatic composition is 0.2wt%.

**Example 10**

This example provided a pre-lithiated method for a negative electrode material for a lithium-ion battery with reference to Example 1, and the difference therebetween lied in that:

1) benzophenone (BP), dimethyl biphenyl (4,4-DMBP) and 4,4-difluorobenzophenone (4,4-DFBP) were mixed in a molar ratio of 1:1:1 to obtain an aromatic aromatic composition, then 0.1 mol of the aromatic composition was dissolved in 200 mL of a mixed solvent of ethyl Cellulose (EC) and dimethyl carbonate (DMC) (the molar ratio of EC to DMC was 1:1), and treated with magnetic stirring for 30 min to obtain an organic solution;

2) 0.45mol of lithium flakes with a lithium content greater than 99.5% was added to the organic solution, left for 10min to allow the lithium fully be dissolved to form a lithiation solution, the lithiation solution had a concentration of 0.5 mol/L, and the average potential difference to lithium possessed by different aromatic compounds was 0.080V vs Li/Li$^+$;

3) 10g SiO powder (0.22mol) was added to 200 mL of the lithiation solution, and then treated with magnetic stirring for 30 min, filtrated by suction filtration and washed with anhydrous ethanol for 3 times, the filtrated materials were placed in a glove box for natural volatilization and drying for 30 min to obtain pre-lithiated SiO powder, denoted as S10.

The negative electrode material prepared in this example comprises an inner core and an aromatic composition layer, the aromatic composition layer is at least partially coated the inner core; the inner core comprises the Si, SiOx and lithium silicates; the aromatic composition layer comprises BP 4,4-DMBP and 4,4-DFBP; in the negative electrode material, the coating amount of the aromatic composition is 0.5wt%.

**Example 11**

This example provided a pre-lithiated method for a negative electrode material for a lithium-ion battery with reference to Example 1, and the difference therebetween lied in that benzophenone (BP), dimethyl biphenyl (4,4-DMBP) and diphenyl were mixed in a molar ratio of 1:1:1 to obtain an aromatic aromatic composition.
The obtained pre-lithiated SiO powder was denoted as S11, and the average potential difference to lithium possessed by different aromatic compounds is 0.108V.
The negative electrode material prepared in this example comprises an inner core and an aromatic composition layer, the aromatic composition layer is at least partially coated the inner core; the inner core comprises the Si, SiOx and lithium silicates; the aromatic composition layer comprises BP, 4,4-DMBP and biphenyl; in the negative electrode material, the coating amount of the aromatic composition is 0.3wt%.

**Example 12**

This example provided a pre-lithiated method for a negative electrode material for a lithium-ion battery with reference to Example 1, and the difference therebetween lied in that dimethyl biphenyl (4,4-DMBP) and diphenyl were mixed in a molar ratio of 1:1 to obtain an aromatic aromatic composition.
The obtained pre-lithiated SiO powder was denoted as S12, and the average potential difference to lithium possessed by different aromatic compounds is 0.155V.
The negative electrode material prepared in this example comprises an inner core and an aromatic composition layer, the aromatic composition layer is at least partially coated the inner core; the inner core comprises the Si, SiOx and lithium silicates; the aromatic composition layer comprises 4,4-DMBP and biphenyl; in the negative electrode material, the coating amount of the aromatic composition is 0.2wt%.

**Example 13**

This example provided a pre-lithiated method for a negative electrode material for a lithium-ion battery with reference to Example 1, and the difference therebetween lied in that dimethyl biphenyl (4,4-DMBP) and 2-methyl biphenyl were mixed in a molar ratio of 1:1 to obtain an aromatic aromatic composition.
The obtained pre-lithiated SiO powder was denoted as S13, and the average potential difference to lithium possessed by different aromatic compounds is 0.089V.
The negative electrode material prepared in this example comprises an inner core and an aromatic composition layer, the aromatic composition layer is at least partially coated the inner core; the inner core comprises the Si, SiOx and lithium silicates; the aromatic composition layer comprises 4,4-DMBP and 2-methyl biphenyl; in the negative electrode material, the coating amount of the aromatic composition is 0.3wt%.

**Example 14**

This example provided a pre-lithiated method for a negative electrode material for a lithium-ion battery with reference to Example 1, and the difference therebetween lied in that benzophenone (BP) and 2,6-lutidine were mixed in a molar ratio of 1:1 to obtain an aromatic aromatic composition.

The obtained pre-lithiated SiO powder was denoted as S14, and the average potential difference to lithium possessed by different aromatic compounds is 0.085V

The negative electrode material prepared in this example comprises an inner core and an aromatic composition layer, the aromatic composition layer is at least partially coated the inner core; the inner core comprises the Si, SiOx and lithium silicates; the aromatic composition layer comprises BP and 2,6-lutidine; in the negative electrode material, the coating amount of the aromatic composition is 0.2wt%.

**Example 15**

This example provided a pre-lithiated method for a negative electrode material for a lithium-ion battery with reference to Example 1, and the difference therebetween lied in that SiO powder with a carbon coating layer was selected as the negative electrode raw material.

The obtained pre-lithiated SiO powder was denoted as S15.

The negative electrode material prepared in this example comprises an inner core and an outer coating layer, the outer coating layer is at least partially coated the inner core; the inner core comprises the Si, SiOx and lithium silicates; the outer coating layer comprises the carbon coating layer and the aromatic composition layer; in the negative electrode material, the coating amount of the aromatic composition is 0.5wt%.

**Comparative Example 1**

1) 10 g SiO powder (0.22 mol) and 3.15 g Li (0.45 mol) were mixed to obtain a mixture;

2) 200 mL of a mixed solvent of ethyl cellulose (EC) and dimethyl carbonate (DMC) (the molar ratio of EC to DMC was 1:1) were added to the mixture;

3) the solution obtained in step (2) was treated with magnetic stirring for 30 min (experimental group 1) or 60 min (experimental group 2), filtrated by suction filtration and washed with anhydrous ethanol for 3 times, the filtrated materials were placed in a glove box for natural volatilization and drying for 30 min to obtain pre-lithiated SiO powder, denoted as D1 and D101 respectively.

**Comparative Example 2**

1) 0.1 mol of benzophenone (BP) was taken and dissolved in 200 mL of ethylene glycol dimethyl ether (DME), and then treated with magnetic stirring for 30 min to obtain a mixed solution;

2) 0.45mol of lithium flakes with a lithium content greater than 99.5% was added to the mixed solution, left for 10min to allow the lithium fully be dissolved to form a lithiation solution;

3) 10g SiO powder (0.22mol) was added to the lithiation solution, and then treated with magnetic stirring for 30 min, filtrated by suction filtration and washed with anhydrous ethanol for 3 times, the filtrated materials were placed in a glove box for natural volatilization and drying for 30 min to obtain pre-lithiated SiO powder, denoted as D2.

**Comparative Example 3**

1) 0.1 mol of dimethyl biphenyl (4,4-DMBP) was taken and dissolved in 200 mL of ethylene glycol dimethyl ether (DME), and then treated with magnetic stirring for 30 min to obtain a mixed solution;

2) 0.45mol of lithium flakes with a lithium content greater than 99.5% was added to the mixed solution, left for 10min to allow the lithium fully be dissolved to form a lithiation solution;

3) 10g SiO powder (0.22mol) was added to the lithiation solution, and then treated with magnetic stirring for 30 min, filtrated by suction filtration and washed with anhydrous ethanol for 3 times, the filtrated materials were placed in a glove box for natural volatilization and drying for 30 min to obtain pre-lithiated SiO powder, denoted as D3.

**Comparative Example 4**

1) 0.1 mol of 4,4-difluorobenzophenone (4,4-DFBP) was taken and dissolved in 200 mL of ethylene glycol dimethyl ether (DME), and then treated with magnetic stirring for 30 min to obtain a mixed solution;
2) 0.45mol of lithium flakes with a lithium content greater than 99.5% was added to the mixed solution, left for 10min to allow the lithium fully be dissolved to form a lithiation solution;
3) 10g SiO powder (0.22mol) was added to the lithiation solution, and then treated with magnetic stirring for 30 min, filtrated by suction filtration and washed with anhydrous ethanol for 3 times, the filtrated materials were placed in a glove box for natural volatilization and drying for 30 min to obtain pre-lithiated SiO powder, denoted as D4.

**Comparative Example 5**

SiO powder without any processing and was denoted as D5.

**Performance testing of experimental group 1:**

The negative electrode material samples S1, S101, S2 to S15 prepared in Examples 1 to 15 and the comparative samples D1, D101, D2, D3, D4, and D5 were respectively mixed with sodium carboxymethyl cellulose, styrene-butadiene rubber and conductive graphite (KS-6) and carbon black (SP) in a ratio of 92:2:2:2:2 to prepare a slurry, the slurry was then uniformly coated on copper foils and dried to form negative electrode plates. The negative electrode plates were assembled into button cells in a glove box under argon atmosphere, in the button cells, the separator used was polypropylene microporous membrane, the electrolyte used was 1 mol/L lithium hexafluorophosphate (the solvent therefor was a mixture of ethylene carbonate, ethyl methyl carbonate and dimethyl carbonate), and the counter electrode used was a lithium metal sheet.
For the above 22 sets of batteries, measurements about the initial coulombic efficiency and reversible capacity were carried out on the LAND CT2001A battery test system, and the measured data were shown in Table 1.
Silicon crystal grains, specific surface area and pH value of the above 22 samples of SiO powder were measured. The measured data about the median diameter of the silicon crystal grains, specific surface area and pH value were shown in Table 1.

Table 1: statistics table for the measured data of the samples

| Sample | Initial coulombic efficiency (%) | Reversible capacity (mAh/g) | Silicon crystal grains (nm) | Specific surface area ($m^2/g$) | pH value |
|---|---|---|---|---|---|
| D1 | 77.1 | 1653.2 | 3.2 | 2.13 | 8.31 |
| D101 | 77.3 | 1632.1 | 3.2 | 2.13 | 8.31 |
| D2 | 78.1 | 1331.8 | 3.3 | 2.17 | 8.68 |
| D3 | 82.1 | 1338.7 | 3.4 | 2.31 | 10.22 |
| D4 | 78.3 | 1335.1 | 3.3 | 2.01 | 8.54 |
| D5 | 76.3 | 1662.0 | 3.2 | 2.33 | 8.72 |
| S1 | 99.2 | 1442.1 | 3.3 | 2.18 | 11.57 |
| S101 | 101.3 | 1420.0 | 3.4 | 2.18 | 11.57 |
| S2 | 97.7 | 1432.7 | 3.2 | 2.20 | 11.55 |
| S3 | 88.1 | 1437.2 | 3.2 | 2.17 | 11.02 |
| S4 | 82.1 | 1433.2 | 3.2 | 2.09 | 10.39 |
| S5 | 84.3 | 1439.2 | 3.4 | 2.29 | 10.57 |
| S6 | 93.2 | 1396.1 | 3.3 | 2.21 | 11.21 |
| S7 | 92.1 | 1388.7 | 3.2 | 2.09 | 11.09 |
| S8 | 89.3 | 1387.9 | 3.3 | 2.15 | 10.92 |

(continued)

| Sample | Initial coulombic efficiency (%) | Reversible capacity (mAh/g) | Silicon crystal grains (nm) | Specific surface area ($m^2$/g) | pH value |
|---|---|---|---|---|---|
| S9 | 81.1 | 1399.4 | 3.3 | 2.17 | 9.97 |
| S10 | 95.3 | 1431.8 | 3.4 | 2.25 | 11.39 |
| S11 | 90.1 | 1385.3 | 3.3 | 2.13 | 11.00 |
| S12 | 82.1 | 1341.1 | 3.4 | 2.20 | 10.07 |
| S13 | 93.7 | 1427.1 | 3.3 | 2.19 | 11.16 |
| S14 | 94.6 | 1432.2 | 3.4 | 2.20 | 11.31 |
| S15 | 87.6 | 1479.3 | 3.2 | 2.19 | 10.87 |

It can be seen from the experimental data in Table 1 that the initial coulombic efficiency of the battery corresponding to Comparative Example 1 is not improved due to the lack of the pre-treatment on the lithium metal and pre-lithiated plates (or powder). In Comparative Example 2, an unsubstituted aromatic compound (biphenyl) is used to treat the lithium source, which results a great limitation on the depth of lithium intercalation, and a merely 78.1% of the initial coulombic efficiency of the battery which has been treated with pre-lithiation, indicating that the unsubstituted aromatic compounds only have high potential after lithiation, which limits the reaction strength with SiO. In Comparative Examples 3 and 4, substituted aromatic compounds are used to treat the lithium source, which enable a certain effect is achieved by the pre-lithiation. In these comparative examples, the molar ratio of the substituted aromatic compounds to SiO is 0.1:0.22, and even an initial coulombic efficiency of about 83% is obtained, the depth of lithium intercalation still poor due to the low concentration of the substituted aromatic compounds.

In contrast, Examples 1-15, in which different combinations of substituted aromatic compounds are used, show that there is synergistic effect between different combinations of substituted aromatic compounds, by which a gradient of potential difference and a channel for lithium intercalation are constructed, and the depth and efficiency of lithium intercalation are improved significantly. From the data about the initial coulombic efficiency it can be seen that various combinations can show extremely high capacity for lithium intercalation. In addition, the silicon grains will essentially not grow under the low-temperature used in the pre-lithiation, which can avoid the expansion of the plates and fall off of the silicon grains on the plate caused by the growth of the grains during the pre-lithiation treatment. By conducting pre-lithiation treatment under a low temperature, the lithium particles can be controlled to not grow at all.

It can be seen from Examples 1 to 15 that even at a low concentration ratio, i.e. a molar ratio of 0.1:0.22=0.46 of the Li-aromatic composition to the negative electrode raw material in a form of powder, an initial coulombic efficiency of more than 90% can also be reached by the pre-lithiated powder material within a short time (30min), indicating that the efficiency for pre- lithiation of the powder material is improved significantly. In this regard, the composition of substituted aromatic compounds has a great advantage on lithiation, and there is also a certain selectivity between the combinations thereof. Further, there is still a certain optimization selectivity between the organic solutions formed by different combinations, which results in a certain difference in the initial coulombic efficiency of Examples 1 and 15.

When the time for the lithiation of SiO is increased from 30min to 60min, the initial coulombic efficiency of the battery which has been performed lithiation treatment by the lithiation solution prepared from the monomer or composition of the substituted aromatic compound is improved. The high capacity for lithium intercalation can be seen from the data about the initial coulombic efficiency, indicating that the composition of substituted aromatic compounds with low concentration has a great advantage on lithiation.

Based on all of the above data, the aromatic composition consisting of the substituted aromatic compounds have greater advantages in solvated pre-lithiation treatment, it can enable the material to have a very high capacity for lithium intercalation, and improves the initial coulombic efficiency and capacity of the battery substantially. Moreover, the substituted aromatic compounds with low concentrations can reduce the loss of lithium metal.

Although the present application is disclosed through the above-mentioned preferred embodiments, it is not used to limit the claims. Some possible changes and modifications can be made by any person skilled in the art without departing from the concept of the present application and thus the scope of protection of the present disclosure is defined by the claims.

**Industrial Applicability**

In summary, the present disclosure provides a negative electrode material, a method therefor and use thereof.

Through combining the aromatic compounds with different potential difference, a gradient channel of potential difference for lithium intercalation is constructed, such that the chemical intercalation of lithium ion can be carried out spontaneously and rapidly between the lithium source and the negative electrode raw material in an organic solvent, thereby improving the depth and efficiency of lithium intercalation effectively, reducing the loss of the irreversible capacity and improving the capacity of batteries.

**Claims**

1. A method for preparing a negative electrode material, comprising:

   conducting a lithiation treatment on a negative electrode raw material in a lithiation solution;
   wherein the lithiation solution comprises Li- aromatic composition;
   wherein the aromatic composition comprises an unsubstituted aromatic compound and a substituted aromatic compound; or the aromatic composition comprises at least two substituted aromatic compounds.

2. The method according to claim 1, having at least one of the following features:

   (1) the aromatic compound comprises at least one of benzene, biphenyl, terphenyl, naphthalene, anthracene, phenanthrene, pyrene, tetracene, or pyridine;
   (2) a substituent of the substituted aromatic compound comprises at least one of alkyl, alkoxy, aryloxy, halogen, ester group, amine group, substituted carbonyl or amide group;
   (3) a substituent of the substituted aromatic compound comprises alkyl which comprises at least one of straight-chain alkyl or branched-chain alkyl having 1 to 6 carbon atoms;
   (4) a substituent of the substituted aromatic compound comprises alkoxy which comprises at least one of straight-chain or branched-chain alkoxy having 1 to 4 carbon atoms;
   (5) a substituent of the substituted aromatic compound comprises aryloxy which comprises phenoxy;
   (6) a substituent of the substituted aromatic compound comprises halogen which comprises at least one of -F, -Cl, -Br or -I;
   (7) a substituent of the substituted aromatic compound comprises ester group which comprises at least one of alkyl ester or aryl ester;
   (8) a substituent of the substituted aromatic compound comprises amine group which comprises at least one of $-NH_2$, $-R_2NH_2$, $-NHR_3$ or $-NR_4R_5$, wherein $R_2$ is selected from at least one of alkylidene or substituted alkylidene having 1 to 3 carbon atoms, and $R_3$, $R_4$ and $R_5$ are independently selected from at least one of straight-chain alkyl or branched-chain alkyl having 1 to 3 carbon atoms;
   (9) a substituent of the substituted aromatic compound comprises substituted carbonyl which comprises $-COR_6$, wherein $R_6$ comprises at least one of straight-chain or branched-chain alkyl, phenyl or substituted phenyl having 1 to 6 carbon atoms;
   (10) the substituted aromatic compound has at least one substituent.

3. The method according to claim 2, wherein the aromatic composition comprises the unsubstituted aromatic compound and the substituted aromatic compound; and the method has at least one of the following features:

   (1) the aromatic composition has a molar percent of the substituted aromatic compound of 3% to 97%;
   (2) the aromatic composition has a molar percent of an alkyl-substituted aromatic compound of 10% to 90%
   (3) the aromatic composition has a molar percent of an alkoxy-substituted aromatic compound of 20% to 80%;
   (4) the aromatic composition has a molar percent of a halogen-substituted aromatic compound of 5% to 40%;
   (5) the aromatic composition has a molar percent of a substituted carbonyl-substituted aromatic compound of 10% to 60%.

4. The method according to any one of claims 1-3, wherein the aromatic composition comprises at least two substituted aromatic compounds; wherein the method has at least one of the following features:

   (1) the aromatic composition has a molar percent of an alkyl-substituted aromatic compound of 10% to 80% and a molar percent of an alkoxy-substituted aromatic compound of 20% to 90%;
   (2) the aromatic composition has a molar percent of an alkyl-substituted aromatic compound of 60% to 95% and a molar percent of a halogen-substituted aromatic compound of 5% to 40%;
   (3) the aromatic composition has a molar percent of an alkoxy-substituted aromatic compound of 60% to 95% and a molar percent of a halogen-substituted aromatic compound of 5% to 40%;

(4) the aromatic composition has a molar percent of an alkyl-substituted aromatic compound of 10% to 90% and a molar percent of another alkyl-substituted aromatic compound of 10% to 90%;

(5) the aromatic composition has a molar percent of an alkyl-substituted aromatic compound of 20% to 50%, a molar percent of a halogen-substituted aromatic compound of 20% to 50%, and a molar percent of a substituted carbonyl-substituted aromatic compound of 20% to 50%;

(6) the aromatic composition has a molar percent of a halogen-substituted aromatic compound of 10% to 50% and a molar percent of a substituted carbonyl-substituted aromatic compound of 50% to 90%;

(7) the aromatic composition has a molar percent of a substituted carbonyl-substituted aromatic compound of 20% to 50%, a molar percent of an alkoxy-substituted aromatic compound of 20% to 50% and a molar percent of a halogen-substituted aromatic compound of 20% to 50%;

(8) the aromatic composition has a molar percent of an alkoxy-substituted aromatic compound of 50% to 95% and a molar percent of a substituted carbonyl-substituted aromatic compound of 5% to 50%.

5. The method according to any one of claims 1-4, wherein the method has at least one of the following features:

(1) the aromatic composition comprises the unsubstituted aromatic compound and at least two substituted aromatic compounds;

(2) the aromatic composition comprises the unsubstituted aromatic compound and at least two substituted aromatic compounds, wherein the substituted aromatic compounds comprise an alkyl-substituted aromatic compound and an amine-substituted aromatic compound;

(3) the lithiation solution is prepared primarily by mixing an organic solution of the aromatic composition and a lithium source; and an organic solvent of the organic solution comprises at least one of ethers solvent, carbonates solvent, benzenes solvent or ketones solvent;

(4) the lithiation solution is prepared primarily by mixing an organic solution of the aromatic composition and a lithium source; and in the organic solution of the aromatic composition, the aromatic composition has a concentration of 0.2 mol/L to 2 mol/L.

6. The method according to any one of claims 1-4, wherein the lithiation solution is prepared primarily by mixing an organic solution of the aromatic composition and a lithium source; wherein the method has at least one of the following features:

(1) the lithium source comprises at least one of lithium metal and lithium alloy having a lithium content greater than 40%;

(2) the lithium source is in a form of at least one of powder, sheet, or bulk;

(3) a molar ratio of the lithium source in mole of Li to the aromatic composition is greater than 2;

(4) the mixing is performed at 10°C-30°C for 5 min-10 min during a preparation of the lithiation solution;

(5) in the lithiation solution, a molar ratio of the Li-aromatic composition to the negative electrode raw material is (0.2 to 2): 1;

(6) the negative electrode raw material comprises at least one of a silicon-based material, a carbon-based material, or a silicon-carbon composite material;

(7) the negative electrode raw material is in a form of powder having a particle size smaller than 50 $\mu$m or plate;

(8) the negative electrode raw material comprises silicon monoxide;

(9) after the lithiation treatment, performing a solid-liquid separation, collecting the solid for washing to obtain a lithiated negative electrode material;

(10) the method further comprises drying the lithiated negative electrode material to obtain a pre-lithiated negative electrode material.

7. A method for preparing a negative electrode material, comprising

conducting a lithiation treatment on a negative electrode raw material in a lithiation solution;
wherein the lithiation solution comprises a Li- aromatic composition;
wherein the aromatic composition comprises at least two aromatic compounds having different potentials.

8. The method according to claim 7, wherein the aromatic composition has at least one of the following features:

(1) a potential range of the aromatic compound to lithium is 0 to 0.5V vs Li/Li$^+$;

(2) different aromatic compounds have a potential gradient to lithium;

(3) different aromatic compounds have an average potential difference to lithium, which satisfies $0<\Delta V\leq 0.3V$.

9.  the method according to claim 8, wherein the average potential difference satisfies:

$$0<\Delta V\leq 0.1V.$$

10. A method for preparing a negative electrode material, comprising

adding a lithium source to a mixed solution comprising an aromatic composition and an organic solvent to form a lithiation solution; wherein the lithiation solution comprises a Li-aromatic compound, and the aromatic composition comprises at least two aromatic compounds having different branched-chains; or the aromatic composition comprises an aromatic compound having a branched-chain and an unmodified aromatic compound; and adding a negative electrode raw material in a form of powder to the lithiation solution and then drying to obtain a pre-lithiated negative electrode material.

11. The method according to claim 10, having at least one of the following features:

(1) the unmodified aromatic compound comprises at least one of benzene, biphenyl, terphenyl, naphthalene, anthracene, phenanthrene, pyrene or tetracene;
(2) the branched-chain comprises at least one of alkanes branched-chain, ethers branched-chain, halogens branched-chain, esters branched-chain, amines branched-chain or benzene-containing branched-chain;
(3) the branched-chain comprises alkanes branched-chain, which comprises at least one of $-CH_3$, $-C_2H_5$ or $-C_3H_7$;
(4) the branched-chain comprises ethers branched-chain, which comprises at least one of $-OCH_3$, $-OCH_2CH_3$ or $-OC_6H_5$;
(5) the branched-chain comprises halogens branched-chain, which comprises at least one of -Cl, -F, -Br or -I;
(6) the branched-chain comprises esters branched-chain, which comprises at least one of benzyl esters branched-chain or benzoic ethers branched-chain;
(7) the branched-chain comprises amines branched-chain, which comprises at least one of $NH_2$, $-CH_2NH_2$, $-CH_2CH_2NH_2$, $-CH(CH_3)NH_2$, $-N(CH_3)_2$, $-NHCH_2CH_3$, $-NHCH_2CH_2CH_3$ or$-NHCOCH_3$.

12. The method according to claim 11, wherein the aromatic composition comprises an aromatic compound having a branched-chain and an unmodified aromatic compound; wherein the method has at least one of the following features:

(1) a molar ratio of the aromatic compound having a branched-chain in the aromatic composition is 3% to 97%;
(2) a molar ratio of the aromatic compound having the alkanes branched-chain in the aromatic composition is 10% to 90%;
(3) a molar ratio of the aromatic compound having the ethers branched-chain in the aromatic composition is 20% to 80%;
(4) a molar ratio of the aromatic compound having the halogens branched-chain in the aromatic composition is 5% to 40%.

13. The method according to claim 10 or 11 or 12, wherein the aromatic composition comprises at least two aromatic compounds having different branched-chains, and the combination of the aromatic compounds having different branched-chain comprises:

10% to 80% by mole of the aromatic compound having the alkanes branched-chain and 20% to 90% by mole of the aromatic compound having the ethers branched-chain; or
60% to 95% by mole of the aromatic compound having the alkanes branched-chain and 5% to 40% by mole of the aromatic compound having the halogens branched-chain; or
60% to 95% by mole of the aromatic compound having the ethers branched-chain and 5% to 40% by mole of the aromatic compound having the halogens branched-chain.

14. The method according to any one of claims 10-13, having at least one of the following features:

(1) the aromatic composition comprises at least two aromatic compounds having different branched-chains and an unmodified aromatic compound;

(2) the aromatic composition comprises at least two aromatic compounds having different branched-chains and an unmodified aromatic compound, and at least one of the aromatic compounds has alkanes branched-chain or amines branched-chain;

(3) the organic solvent comprises at least one of dimethyl ether, dimethyl carbonate, tetrahydrofuran, carbonates, toluene, benzene, ethyl ether, propylene oxide or ketones solvent;

(4) in the mixed solution, the aromatic compound has a concentration of 0.2 mol/L to 2 mol/L.

15. The method according to any one of claims 10-13, having at least one of the following features:

(1) the lithium source comprises at least one of lithium metal or lithium alloy having a lithium content greater than 40%;

(2) a molar ratio of Li in the lithium source to the aromatic composition is greater than 2;

(3) the lithium source is dissolved in the mixed solution at 10°C-30°C for 5 min-10 min;

(4) a molar ratio of the Li-aromatic compound to the negative electrode raw material in a form of powder is (0.2 to 2): 1;

(5) the negative electrode raw material in a form of powder comprises at least one of a silicon-based material, a carbon-based material, or a silicon-carbon composite material;

(6) a particle size of the negative electrode raw material in a form of powder is smaller than 50 $\mu$m;

(7) stirring during the dissolving comprises at least one of magnetic stirring, ultrasonic stirring or mechanical stirring;

(8) the stirring is performed for 15min to 60min;

(9) the drying is performed under protective gas, and the protective gas comprises at least one of helium, neon, argon, krypton or xenon;

(10) the drying is performed for 15 min-60 min.

16. The method according to claim 10, comprising:

adding a lithium source to a mixed solution comprising an aromatic composition and an organic solvent to form a lithiation solution; the lithiation solution comprises Li-aromatic compound; wherein the aromatic composition comprises an aromatic compound having alkanes branched-chain and an aromatic compound having halogens branched-chain; and

adding silicon monoxide to the lithiation solution, stirring before filtering, washing with an organic solvent, filtering and drying to obtain a pre-lithiated silicon monoxide material.

17. A negative electrode material, comprising nano-silicon, a lithium siloxide compound and an aromatic composition, wherein the lithium siloxide compound comprises at least one of $Li_2Si_2O_5$, $Li_2SiO_3$ or $Li_4SiO_4$, and the aromatic composition at least partially coats the nano-silicon and the lithium siloxide compound.

18. The negative electrode material according to claim 17, wherein the negative electrode material comprises an inner core and an aromatic composition layer, and the negative electrode material has at least one of the following features:

(1) the inner core comprises the nano-silicon and the lithium siloxide compound;

(2) the nano-silicon is dispersed in the lithium siloxide compound;

(3) the inner core further comprises $SiO_x$, wherein x satisfies 0.4tisfie;

(4) the aromatic composition comprises at least two aromatic compounds with different potentials;

(5) different aromatic compounds have an average potential difference ($\Delta V$ vs Li/Li$^+$) to lithium, which satisfies $0 < \Delta V \leq 0.3V$;

(6) the negative electrode material has a median size of 4 $\mu$m to 8 $\mu$m;

(7) the negative electrode material has a specific surface area of 1.5 m$^2$/g to 4.2 m$^2$/g;

(8) the negative electrode material has a pH of 10 to 11.5;

(9) the negative electrode material further comprises a carbon coating layer;

(10) the negative electrode material further comprises a carbon coating layer, wherein the carbon coating layer covers the inner core;

(11) the negative electrode material further comprises a carbon coating layer, wherein the aromatic composition is distributed in pores of the carbon coating layer and on an outer surface of the carbon coating layer;

(12) a coating amount of the aromatic composition in the negative electrode material is 0 wt% to 2 wt%.

19. A negative electrode plate, comprising a current collector and a negative electrode layer disposed on a surface of the current collector; wherein the negative electrode layer comprises the negative electrode material obtained by the method for preparing the negative electrode material according to any one of claims 1-6, the negative electrode material obtained by the method for preparing the negative electrode material according to any one of claims 7-9, the negative electrode material obtained by the method for preparing the negative electrode material according to any one of claims 10-16 or the negative electrode material according to claim 17 or 18.

20. A lithium-ion battery, wherein the lithium-ion battery comprises the negative electrode plate according to claim 19.

mixing an organic solution of the aromatic composition and a lithium source to prepare a lithiation solution; wherein the aromatic composition comprises an unsubstituted aromatic compound and a substituted aromatic compound; or the aromatic composition comprises at least two substituted aromatic compounds;

S10

conducting a lithiation treatment on a negative electrode raw material in a lithiation solution, and then drying to obtain a pre-lithiated negative electrode material

S20

FIG. 1

## INTERNATIONAL SEARCH REPORT

| International application No. |
| --- |
| **PCT/CN2022/076680** |

**A.    CLASSIFICATION OF SUBJECT MATTER**

H01M 10/0567(2010.01)i

According to International Patent Classification (IPC) or to both national classification and IPC

**B.    FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; SIPOABS; DWPI; IEEE; CNKI; 锂; 添加剂; 芳香族; 取代; 多种; 混合; Li; additives; aromatic; substitution; multiple; mixture

**C.    DOCUMENTS CONSIDERED TO BE RELEVANT**

| Category* | Citation of document, with indication, where appropriate, of the relevant passages | Relevant to claim No. |
| --- | --- | --- |
| X | US 2006147809 A1 (THE UNIVERSITY OF CHICAGO) 06 July 2006 (2006-07-06) description, paragraphs 31-32 | 1-20 |
| X | US 2010040954 A1 (AMINE KHALIL et al.) 18 February 2010 (2010-02-18) description, paragraphs 49-55 | 1-20 |
| X | US 2019131621 A1 (JNC CORP. et al.) 02 May 2019 (2019-05-02) description paragraphs 24-54 | 1-20 |
| A | CN 1430306 A (MITSU CHEMICALS INC.) 16 July 2003 (2003-07-16) entire document | 1-20 |

☐ Further documents are listed in the continuation of Box C.      ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **12 April 2022** | **26 April 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2022/076680**

| Patent document cited in search report | | | Publication date (day/month/year) | Patent family member(s) | | | Publication date (day/month/year) |
|---|---|---|---|---|---|---|---|
| US | 2006147809 | A1 | 06 July 2006 | US | 9012096 | B2 | 21 April 2015 |
| US | 2010040954 | A1 | 18 February 2010 | US | 8283074 | B2 | 09 October 2012 |
| US | 2019131621 | A1 | 02 May 2019 | KR | 20180134939 | A | 19 December 2018 |
| | | | | EP | 3442060 | A1 | 13 February 2019 |
| | | | | WO | 2017175812 | A1 | 12 October 2017 |
| | | | | JP | WO2017175812 | A1 | 27 June 2019 |
| | | | | CN | 109314235 | A | 05 February 2019 |
| | | | | TW | 201806860 | A | 01 March 2018 |
| | | | | EP | 3442060 | A4 | 25 September 2019 |
| | | | | EP | 3442060 | B1 | 03 June 2020 |
| | | | | US | 10777809 | B2 | 15 September 2020 |
| CN | 1430306 | A | 16 July 2003 | KR | 20030057321 | A | 04 July 2003 |
| | | | | JP | 2003257479 | A | 12 September 2003 |
| | | | | CN | 1207810 | C | 22 June 2005 |
| | | | | KR | 509968 | B1 | 24 August 2005 |
| | | | | JP | 4281895 | B2 | 17 June 2009 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110193700